# EUROPÄISCHE PATENTANMELDUNG

(11) **EP 1 413 190 A1**
(43) Veröffentlichungstag der Anmeldung: **28.04.2004**
(21) Anmeldenummer: 03022016.4
(22) Anmeldetag: 01.10.2003
(51) Int. Cl.: A01F 15/10, A01D 90/04

(54) **Erntebergungsmaschine**

(30) Priorität: 24.10.2002 DE 10249595
(71) Anmelder: DEERE & COMPANY, Moline, Illinois 61265-8098 (US)
(72) Erfinder: Viaud, Jean, 70100 Gray (FR); Lucand, Philippe, 70120 Melin (FR); Derscheid, Daniel Eric, Ottumwa IA 52501 (US)
(74) Vertreter: Magin, Ludwig Bernhard

(57) **Zusammenfassung**

2.1. Bekannte Rundballenpressen weisen einen Gutaufnehmer sowie gegebenenfalls eine Messerwelle vor einem Einlass einer Presskammer auf. Es kann ein weiterer Rotor zwischen Aufnehmerrotor und Messerwelle vorgesehen sein. Die zumindest teilweise unterschlächtig fördernden Rotoren benötigen eine relativ hohe Antriebsenergie und sorgen nicht für einen sicheren Gutfluss.
2.2. Es wird eine Erntebergungsmaschine (10) mit einer Presskammer (18) und einem in diesen führenden Einlass (22) vorgeschlagen, die einen überkopf fördernden ersten Rotor (36) unmittelbar am Einlass (22) aufweist. Dieser kann als Schneidrotor ausgestaltet sein. Vorzugsweise ist dem ersten Rotor (30) stromaufwärts ein zweiter Rotor (36) vorgelagert, der ebenfalls überkopf fördert.
2.3. Erntebergungsmaschinen (10) werden in der Landwirtschaft eingesetzt.

## Beschreibung

Die Erfindung betrifft eine Erntebergungsmaschine mit einer Presskammer und einem Einlass, dem ein überkopf fördernder Rotor zugeordnet ist.

Eine Großballenpresse mit einer Einrichtung zum Aufnehmen von auf dem Boden liegenden landwirtschaftlichen Halmgut ist aus der DE 37 19 845 A1 bekannt. Diese Großballenpresse weist einen Förderkanal mit einem Zwischenförderer auf, der mit Mitnehmern versehen ist. Den Mitnehmern des Zwischenförderers ist jeweils ein Messer einer Messerwelle einer Schneideinrichtung zugeordnet. Die Messerwelle fördert das Erntegut überkopf, während der Zwischenförderer eine gegensinnige Drehrichtung zur Messerwelle aufweist und schräg oberhalb dieser angeordnet ist.

Eine Rundballenpresse mit einem unterhalb einer Presskammmer angeordneten Gutaufnehmer und einer überkopf fördernden Messerwelle ist aus der WO 92/09191 bekannt. Zwischen dem Gutaufnehmerrotor und der Messerwelle ist eine drehbar gelagerte und vom Gutstrom angetriebene Zwischenrolle angeordnet, die eine störungsfreie Förderung des Ernteguts unterstützen soll.

Eine Rundballenpresse mit einem überkopf fördernden Aufnehmerrotor und einer unterschlächtig fördernden Messerwelle ist weiterhin aus der DE 43 08 646 A1 bekannt. Zwischen den gegensinnig angetriebenen Wellen des Gutaufnehmerrotors und der Messerwelle ist ein vom Erntegut angetriebener weiterer Rotor zur Förderung eines störungsfreien Gutflusses vorgesehen. Der weitere Rotor dreht sich gegensinnig zum Aufnehmerrotor und gleichsinnig mit der Messerwelle.

Eine Ballenpresse für landwirtschaftliches Halmgut ist schließlich in der DE 198 06 630 A1 beschrieben. Diese Ballenpresse weist einen in Gutförderrichtung vor einer Presskammer angeordneten Aufnehmerrotor und eine anschließende Zerkleinerungseinrichtung auf, die aus einem oberschlächtig fördernden Rotor in Gestalt einer als Schneidrotor fungierenden Messerwelle, Gegenmessern und Abstreifern besteht. Zwischen Aufnehmerrotor und Schneidrotor ist eine das Halmgut auf Rotor- bzw. Presskanalbreite zusammenführende, mit Zinken besetzte, unterschlächtig fördernde Querförderschnecke angeordnet, die das Erntegut in den oberschlächtig fördernden Schneidrotor übergibt.

Die oben beschriebenen Ballenpressen sind mit dem Nachteil verbunden, dass mit den daraus bekannten Anordnungen zur Förderung von Erntegut zwischen Aufnehmerrotor und Pressraum kein zuverlässiger Gutfluss gewährleistet werden kann. Zudem benötigen die unterschlächtig fördernden Messerwellen eine relativ hohe Antriebsenergie. Die unterschlächtige Förderung beeinträchtigt weiterhin die Qualität der Umfangsfläche des Ballens in der Presskammer.

Das der Erfindung zu Grunde liegende Problem wird darin gesehen, eine zuverlässige und verstopfungsfreie Gutförderung zu einem bzw. in einen Pressraum einer Rundballenpresse zu gewährleisten.

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiter entwickeln.

Die Anordnung eines überkopf fördernden Rotors an einem Einlass eines Press- oder sonstigen Sammelraums einer als Rundballenpresse, Ladewagen oder dergleichen ausgebildeten Erntebergungsmaschine ist erfindungsgemäß so gestaltet, dass ein Umfangsbereich des Rotors mindestens bis an einen Umfangsbereich der Presskammer reicht. Mit dieser Anordnung ist der Vorteil verbunden, dass ein sicherer und verstopfungsfreier Gutfluss zwischen Gutaufnehmer und Pressraum der Rundballenpresse ermöglicht wird. Der unmittelbar am Einlass der Presskammer angeordnete erste Rotor kann vorzugsweise ein Schneidrotor sein, der überkopf fördert. Die aneinander grenzende Anordnung von Einhüllender bzw. Mantelfläche des Schneidrotors und eines einhüllenden Abschnittes der Presskammer, der gleichzeitig den äußeren Umfang eines zu pressenden Rundballens definiert, sorgt für eine zuverlässige Zuführung des Erntegutes zur Presskammer. Die Einhüllenden können sich bspw. tangential berühren oder gering voneinander beabstandet sein. Sie können sich jedoch ggf. auch geringfügig schneiden.

Dem am Einlass des Pressraums angeordneten ersten Rotor, der vorzugsweise als Schneidrotor ausgebildet ist, ist vorzugsweise stromaufwärts ein Gutaufnehmer vorgelagert. Der Gutaufnehmer kann dabei eine größere Breite aufweisen als der erste Rotor. In diesem Fall kann eine Querfördereinrichtung zur Zusammenführung des Gutflusses zwischen Gutaufnehmer und Schneidrotor vorgesehen sein. Die Gutförderung wird hierbei von der Querförderung weitgehend getrennt, so dass eine bessere Verarbeitung von Mengenspitzen des aufgenommenen Ernteguts ermöglicht ist.

Dem ersten Rotor ist vorzugsweise stromaufwärts wenigstens ein zweiter Rotor vorgelagert, der dem Gutaufnehmer nachgelagert ist. Vorzugsweise erstreckt sich der zweite Rotor zumindest über eine seitliche Differenz zwischen der Aussenkante des Gutaufnehmers und dem ersten Rotor. Der zweite Rotor kann somit für die notwendige Querförderung des Erntegutes zwischen Gutaufnehmer und Schneidrotor sorgen. Die Verteilung der Funktionen Fördern und Zerkleinern auf zwei unterschiedliche Förderelemente sorgt für einen besseren und störungsfreieren Gutfluss.

Der zweite Rotor weist vorzugsweise zumindest die gleiche Baubreite auf wie der Gutaufnehmer. Er kann aber auch eine größere Baubreite aufweisen. Vorzugsweise fördern sowohl Gutaufnehmer wie auch erster und zweiter Rotor das aufgenommene Erntegut überkopf. Die Rotoren benötigen auf diese Weise eine relativ geringe Antriebsenergie und fördern dennoch das aufgenommene Gut in zuverlässiger Art und Weise vom Boden zum Pressraum der Ballenpresse. Die Förderung innerhalb der Fördereinrichtung verläuft mit nur geringen Wellenbewegungen, so dass gegenüber einer unterschlächtigen Förderung ein wesentlich flüssigerer und störungsfreierer Gutfluss ermöglicht ist.

Weiterhin kann der zweite Rotor zumindest in Außenabschnitten jeweils eine Querfördereinrichtung mit einer nach innen gerichteten axialen Förderkomponente aufweisen. Er kann bspw. als Schnecke ausgebildet bzw. mit schneckenförmigen Stegen versehen sein. Weiterhin kann der zweite Rotor einen mittleren Abschnitt mit daran angeordneten Mitnehmern aufweisen. Die Mitnehmer können bspw. als Finger, Zinken, Mitnehmerstege und/oder Paddel ausgebildet sein. Die Mitnehmer können alternativ aber auch als Schneckenwindungen ausgebildet sein.

Eine Ausgestaltung der Erfindung sieht vor, dass zumindest die Außenabschnitte des zweiten Rotors angetrieben sind. Gegebenenfalls kann der zweite Rotor auch lediglich aus den angetriebenen Außenabschnitten bestehen und keinen mittleren Abschnitt aufweisen. Alternativ kann der zweite Rotor lediglich durch den Gutfluss in Rotation versetzt werden. Der optionale Antrieb zumindest der Außenabschnitte des zweiten Rotors kann bspw. mittels Ketten- oder Riemenantrieb erfolgen. Der zweite Rotor kann ggf. auch einen hydraulischen oder pneumatischen Antrieb aufweisen.

Gemäß einer weitern Ausführungsform der Erfindung ist zwischen zweitem Rotor und erstem Rotor eine Leitvorrichtung angeordnet, die vorzugsweise nachgiebig ausgestaltet sein kann. Die Leitvorrichtung kann bspw. als Platte, als Walze und/oder als Förderband ausgebildet sein. Mit Hilfe des zweiten Rotors werden größere Halmgutansammlungen auseinander gezogen, wodurch das Erntegut aufgelockert und gleichmäßiger verteilt wird. Bei größeren Ballungen von Erntegut werden diese bei relativ geringer Reibung an die gegebenenfalls nachgiebige Leitvorrichtung gedrückt und dort gegebenenfalls vorverdichtet. Die vorverdichtend angesammelten Erntegutportionen können dann vom Schneidrotor leicht zerkleinert werden. Der Schneidrotor benötigt nur eine relativ geringe Antriebsenergie. Die erfindungsgemäße Fördereinrichtung weist einen sehr günstigen Gesamtwirkungsgrad auf und benötigt daher zu ihrem Antrieb keine große zusätzliche Energie, die vom Zugfahrzeug entnommen werden muss.

Insbesondere bei der Ausbildung der Erntebergungsmaschine als eine Rundballenpresse mit einer veränderlichen und z. B. von Riemen, Stabketten, beweglichen Rollen oder dergleichen umgebenen Presskammer kommt der Vorteil des oberschlächtigen ersten Rotors voll zum Tragen, weil dort die anfängliche Ballenbildung schwierig ist.

Eine aggressive Förderung des Pressguts wird dadurch erreicht, dass der erste und/oder der zweite Rotor als ein um eine tatsächliche oder gedachte Achse umlaufender mit Gabeln, Zinken, Fingern oder dergleichen bestückter Drehkörper ausgebildet ist.

Wenn der zweite Rotor quer zum Gutfluß beweglich ist, z. B. auf Armen schwenkbar oder in der Führung verschiebbar, kann er entweder alleine oder zusätzlich zu einer Verstellung eines Leitblechs stets für eine ausreichende Vorverdichtung des Pressguts sorgen, was den Fördervorgang verbessert.

In der Zeichnung ist ein nachfolgend näher beschriebenes Ausführungsbeispiel der Erfindung dargestellt. Es zeigt:
- Fig. 1: eine Erntebergungsmaschine mit einem frontseitig angeordneten Erntegutaufnehmer in Seitenansicht und schematischer Darstellung,
- Fig. 2: eine schematische Seitenansicht des Gutaufnehmers mit seinen Förderkomponenten,
- Fig. 3: eine schematische Perspektivdarstellung der wesentlichen Komponenten der erfindungsgemäßen Fördereinrichtung,
- Fig. 4: eine schematische Draufsicht auf die Fördereinrichtung gemäß Fig. 3,
- Fig. 5 bis 7: jeweils schematische Perspektivdarstellungen dreier alternativer Varianten eines Rotors der erfindungsgemäßen Fördereinrichtung,
- Fig. 8: eine schematische Draufsicht auf eine alternative Variante der erfindungsgemäßen Fördereinrichtung,
- Fig. 9: eine schematische Perspektivdarstellung einer alternativen Ausgestaltung des zwischen Gutaufnehmer und erstem Rotor der Fördereinrichtung angeordneten zweiten Rotors und
- Fig. 10 bis 17: jeweils schematische Seitenansichten verschiedener alternativer Varianten einer der Fördereinrichtung zugeordneten Leitvorrichtung.

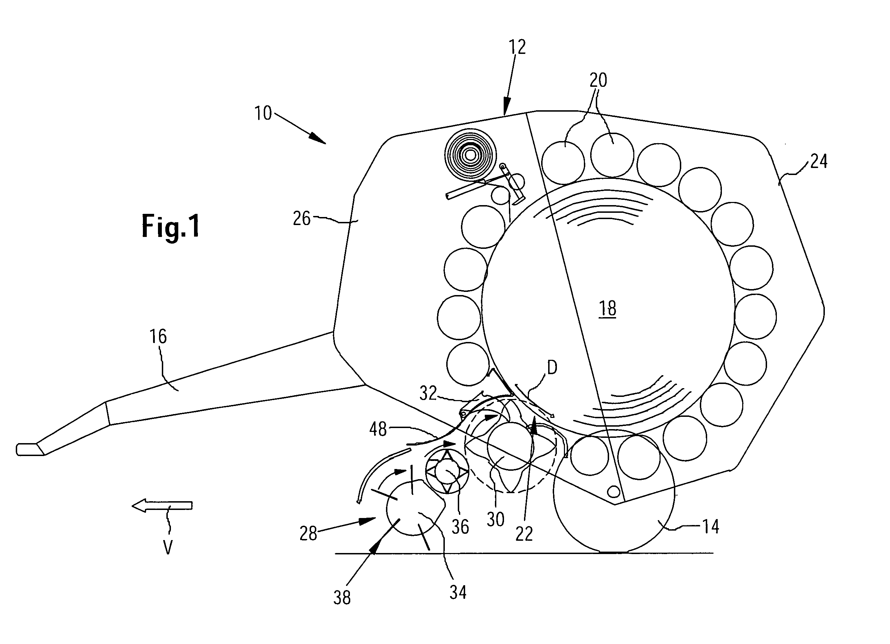

Figur 1 zeigt eine Erntebergungsmaschine 10 mit einem Gutaufnehmer 28 an einer vorderen unteren Seite, der sich über die gesamte Arbeitsbreite der Erntebergungsmaschine 10 erstreckt, und einer Fördervorrichtung 8.

Die Erntebergungsmaschine 10 ist im vorliegenden Ausführungsbeispiel in der Form einer Rundballenpresse ausgeführt, könnte aber auch ein Ladewagen, eine Großballenpresse und dgl. sein, bei denen das aufzunehmende Gut zerkleinert wird.

Die Erntebergungsmaschine 10 ist von bekannter Bauart und umfasst einen Rahmen 12, der sich über Räder 14 auf den Boden abstützt und mittels einer Deichsel 16 an ein nicht gezeigtes Zugfahrzeug angehängt werden kann. Der Rahmen 12 trägt zudem eine Presskammer 18, die von Rollen 20 umgeben wird und einen Einlass 22 aufweist. Die Rollen 20 sind auf einer Kreislinie angeordnet und erstrecken sich eines Teils in einer vertikalen schwenkbaren Heckklappe 24 und andern Teils in einem starren Gehäuse 26. Eine Drehrichtung eines in der Presskammer 18 zu formenden Rundballens ist durch einen Pfeil D mit einer Pfeilrichtung entgegen des Uhrzeigersinns angedeutet. An der Unterseite des Gehäuses 26 und dem Einlass 22 vorgelagert, befindet sich ein Gutaufnehmer 28, dem stromabwärts die Schneidvorrichtung 32 folgt.

Die Aufgabe der Erntebergungsmaschine 10 besteht darin, auf dem Boden liegendes Erntegut, meist Gras, Heu oder Stroh, mittels des Gutaufnehmers 28 aufzunehmen, es mittels der Schneidvorrichtung 32 in kleine Stücke zu schneiden und in die Presskammer 18 zu fördern, wo es zu einem kompakten Ballen gepresst wird. Durch das Öffnen der Heckklappe 24 wird der Ballen auf den Boden abgegeben und kann weiter verarbeitet werden.

Die Schneidvorrichtung 32 ist im Wesentlichen ebenfalls von bekanntem Aufbau und enthält einen hier nicht dargestellten Rahmen sowie eine Förderfläche, Messer, ggf. Stellelemente und ggf. einen Sensor.

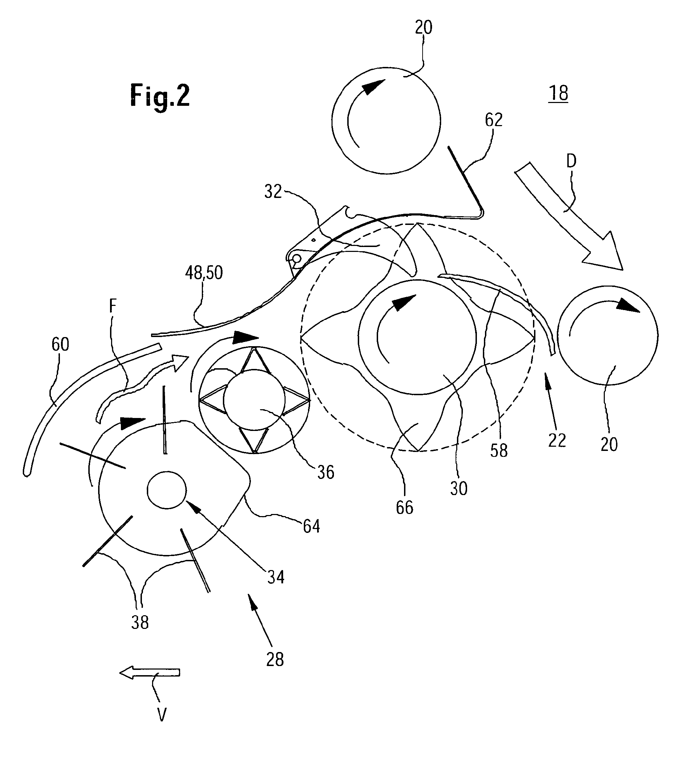

Figur 2 zeigt eine schematische Seitenansicht der Fördervorrichtung 8, mit einem überkopf fördernden ersten Rotor 30, der im gezeigten Ausführungsbeispiel als Schneidrotor ausgebildet ist und eine Vielzahl von nebeneinander und beabstandet voneinander angeordneten Mitnehmern 66 aufweist, zwischen die jeweils Messer einer Schneidvorrichtung 32 hineinragen bzw. eingreifen. Um das zerschnittene Erntegut vom ersten Rotor 30 abzustreifen und zuverlässig in die Presskammer 18 zu fördern, sind an der Schneidvorrichtung 32 jeweils Abstreifer 58 vorgesehen, die in die Zwischenräume zwischen den Mitnehmern 66 eingreifen.

Dem ersten Rotor 30 ist stromaufwärts ein zweiter Rotor 36 kleineren Durchmessers als der erste Rotor 30 vorgelagert, dessen Funktion und Ausgestaltung anhand der folgenden Figuren näher erläutert wird.

Dem zweiten Rotor 36 vorgelagert ist der eigentliche Gutaufnehmer 28, der im Wesentlichen aus einer Reihe von rotierenden Aufnehmerzinken 38 besteht, die an einem Aufnehmerrotor 34 befestigt sind. Die Aufnehmerzinken 38 des Aufnehmerrotors 34, der erste Rotor 30 und der zweite Rotor 36 rotieren in der gezeigten Darstellung jeweils im Uhrzeigersinn, so dass sie jeweils überkopf fördern. Die Förderrichtung des Ernteguts ist durch einen Pfeil F angedeutet. Die Vorschubrichtung der Erntebergungsmaschine 10 ist ebenfalls durch einen Pfeil V angedeutet. Es ist weiterhin deutlich erkennbar, dass die Einhüllende des als Schneidrotor ausgebildeten ersten Rotors 30 und eines an der inneren Einhüllenden der Rollen 20 der Presskammer 18 anliegenden Kreises zumindest nah aneinander grenzen. Gegebenenfalls können sich die Einhüllenden berühren oder auch geringfügig schneiden. Die Drehrichtung eines zu bildenden Rundballens ist durch den Pfeil D angedeutet.

Schräg oberhalb des Gutaufnehmers 28 und bis vor diesen ragend ist ein Leitblech 60 angeordnet, das abschnittsweise tangential um einen Drehkreis der rotierenden Aufnehmerzinken 38 und in einem definierten Abstand zu diesen gewölbt ist. Der Abstand des Leitblechs 60 zum Aufnehmerrotor 34 definiert das Aufnahmevolumen des Gutaufnehmers 28. Dem Leitblech 60 ist eine Leitvorrichtung 48 nachgeordnet, die hier als Platte 50 ausgestaltet ist. Der Leitvorrichtung 48 folgt schräg oberhalb des ersten Rotors 30 die Schneidvorrichtung 32. Das Leitblech 60 befindet sich ungefähr über dem Aufnehmerrotor 34. Die Leitvorrichtung 48 befindet sich ungefähr oberhalb des zweiten Rotors 36.

Weiterhin ist zwischen dem ersten Rotor 30 und oberhalb von diesem angeordneten Rollen 20 eine Führung 62, bspw. in Gestalt eines Leitbleches oder dergleichen vorgesehen, die den Rundballen daran hindert, von oben auf die Klingen des ersten Rotors 30 zu drücken und die Gutförderung zwischen Schneidvorrichtung 32 und erstem Rotor 30 zu beeinträchtigen. Diese beschriebenen Rotoren 30, 36 bilden die oberschlächtig fördernde Fördervorrichtung 8,sichern einen störungsfreien Gutfluss und zeichnen sich durch eine nur geringe notwendige Antriebsenergie aus.

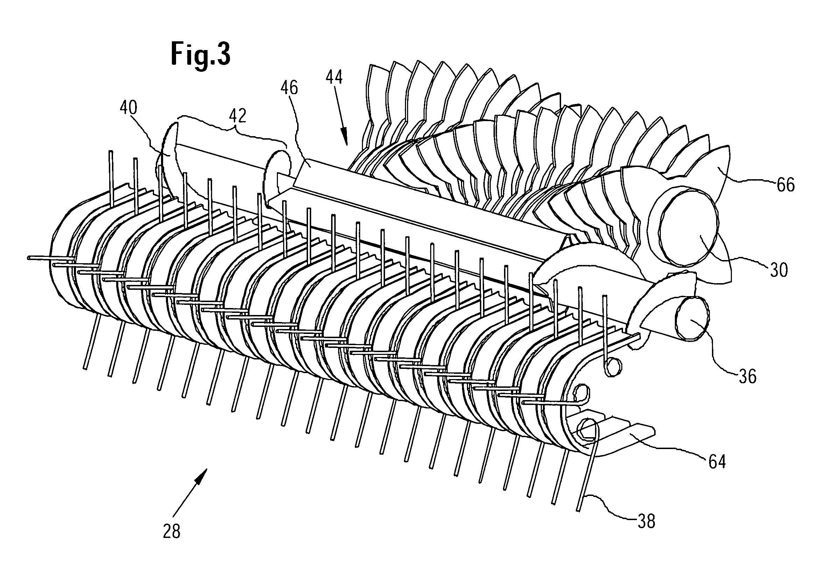

Figur 3 zeigt in einer schematischen Perspektivdarstellung die Anordnung der Rotoren der Fördervorrichtung zueinander. Dem Gutaufnehmer 28 mit seinen rotierenden Aufnehmerzinken 38 ist schräg oberhalb der zweite Rotor 36 nachgeordnet. Dem zweiten Rotor 36 wiederum ist der erste Rotor 30 nachgeordnet, der eine Mitnehmerwelle und eine Anzahl von voneinander beabstandeten Mitnehmern 66 aufweist.

Die Aufnehmerzinken 38 des Gutaufnehmers 28 streichen jeweils zwischen U-förmigen Rahmenblechen 64 hindurch, die den Aufnehmerrotor 34 nach vorne hin umhüllen und längeres Halmgut daran hindern, sich in den Aufhängungen der Zinken am Aufnehmerrotor 34 zu verfangen. Der überkopf fördernde Gutaufnehmer 28 übergibt das Erntegut an den ebenfalls überkopf fördernden zweiten Rotor 36, der im Wesentlichen aus drei Abschnitten besteht.

Ein mittlerer Abschnitt 46 ist als Tangentialfördereinrichtung ausgestaltet. Zwei Außenabschnitte 42 sind jeweils als Querfördereinrichtungen ausgestaltet. An den Außenabschnitten 42 sind jeweils Stege in Gestalt von Schnecken 40 aufgebracht, die eine axiale Förderkomponente für das Erntegut in Richtung zum mittleren Abschnitt 44 bewirken. Der zweite Rotor 36 kann entweder passiv vom Erntegut angetrieben oder aktiv, bspw. durch einen Riemen- oder Kettenantrieb, angetrieben werden.

Der das Erntegut überkopf fördernde zweite Rotor 36 übergibt es an den ersten Rotor 30, der eine deutlich geringere Arbeitsbreite als der zweite Rotor 36 aufweist. Der erste Rotor 30 zerschneidet das Erntegut und fördert es anschließend in den Pressraum (nicht dargestellt). Vier jeweils eine gewölbte Kontur aufweisende Mitnehmer 66 des ersten Rotors 30 sind jeweils leicht versetzt zueinander angeordnet, so dass insgesamt eine spiralige Außenkontur der Mitnehmer kanten entsteht. Diese spiralige Kontur sorgt für einen leichteren Schnitt, da nicht alle Mitnehmer gleichzeitig die Messer der Schneidvorrichtung 32 passieren, sondern ein versetzter Schnitt entsteht.

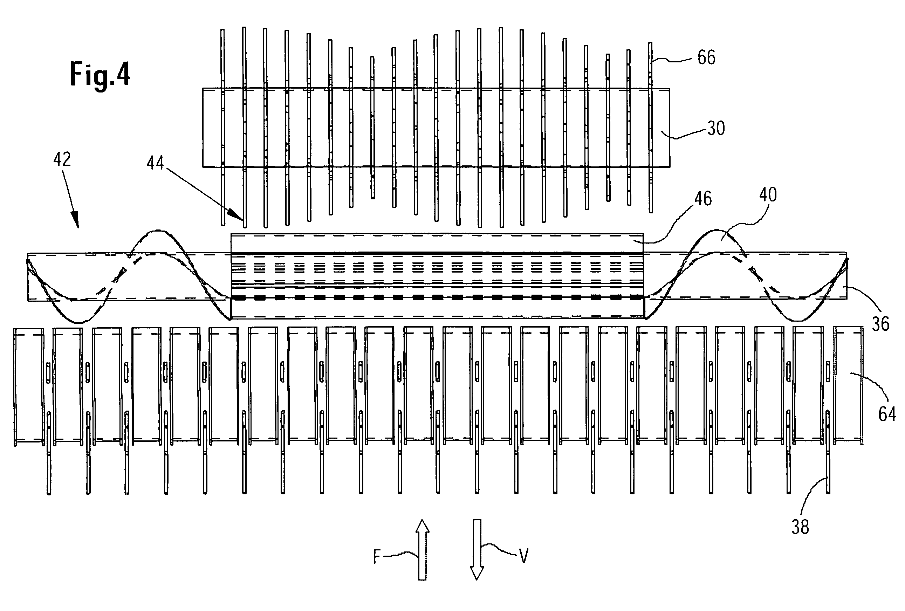

Die schematische Draufsicht der Figur 4 verdeutlicht die Anordnung und Ausgestaltung der drei nacheinander angeordneten und jeweils überkopf fördernden Rotoren 30, 34, 36. Die Vorschubrichtung V ist der Förderrichtung F entgegengesetzt. Der zweite Rotor 36 weist vorzugsweise zumindest eine gleiche Arbeitsbreite auf wie der Gutaufnehmer 28. Der erste Rotor 30 weist zumindest eine der Breite des mittleren Abschnitts 44 des zweiten Rotors 36 entsprechende Arbeitsbreite auf. Die Außenabschnitte 42 des zweiten Rotors 36 mit ihren Schnecken 40 sorgen hierbei für die Querförderkomponente in Richtung zum mittleren Abschnitt 44, so dass der erste Rotor 30 das Erntegut erfassen und zerschneiden kann.

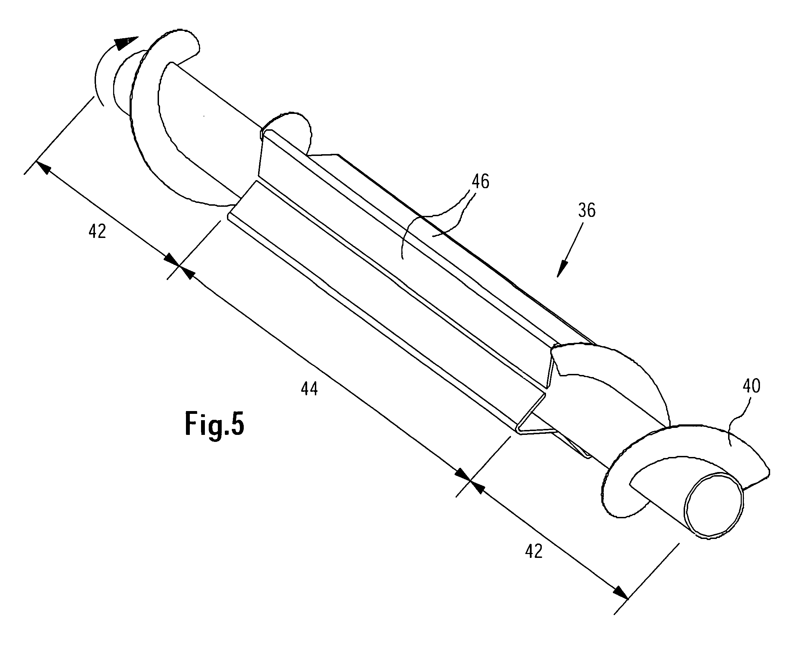

Eine erste Variante des zweiten Rotors 36 ist anhand der perspektivischen Schemadarstellung der Figur 5 verdeutlicht. Die Außenabschnitte 42 sind jeweils mit einer Schnecke 40 versehen, die bei einer überkopf-Förderung entsprechend einer eingezeichneten Drehrichtung für eine axiale Förderkomponente in Richtung zum mittleren Abschnitt 44 sorgen. Der mittlere Abschnitt 44 ist mit einer Reihe von parallel zur Drehachse ausgerichteten Mitnehmerstegen 46 versehen, die bei passivem Antrieb des zweiten Rotors 36 für eine ausreichende Bewegungsübertragung auf den Rotor 36 sorgen.

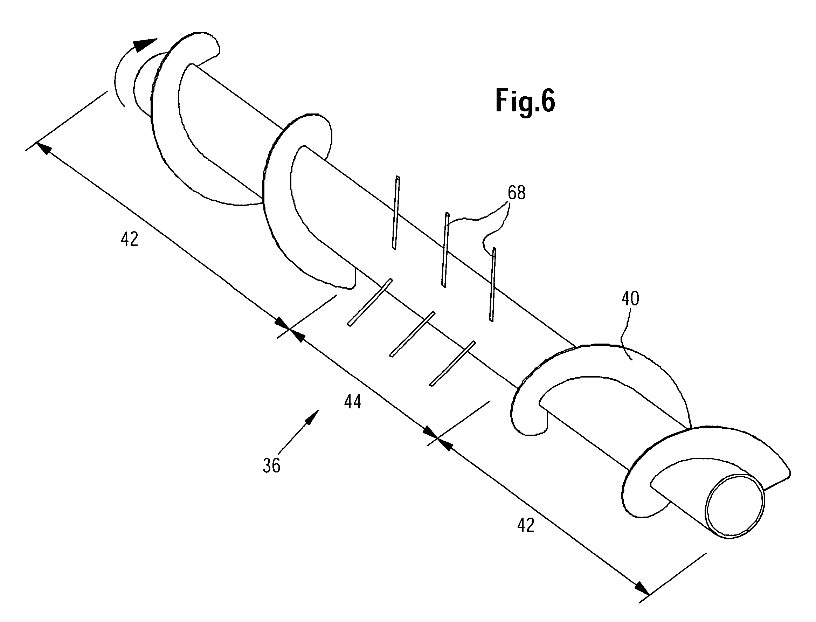

Anstatt der Mitnehmerstege 46 kann der mittlere Abschnitt 44 auch mit radial nach außen weisenden Mitnehmerzinken 68 ausgestattet sein, wie dies in Figur 6 beispielhaft dargestellt ist. Die Mitnehmerzinken 68 können bspw. als starre Stahlstifte oder auch als federnd aufgehängte Stifte ausgestaltet sein. Die Mitnehmerzinken 68 können jedoch in einer vorteilhaften Ausgestaltung auch aus einem zumindest teilweise flexiblen Material bestehen, bspw. aus gewebeverstärktem Gummi oder dergleichen. Vorzugsweise sind die Mitnehmerzinken 68 austauschbar gestaltet, um bei auftretendem Verschleiß oder bei einer Beschädigung für einen leichten Ersatz sorgen zu können.

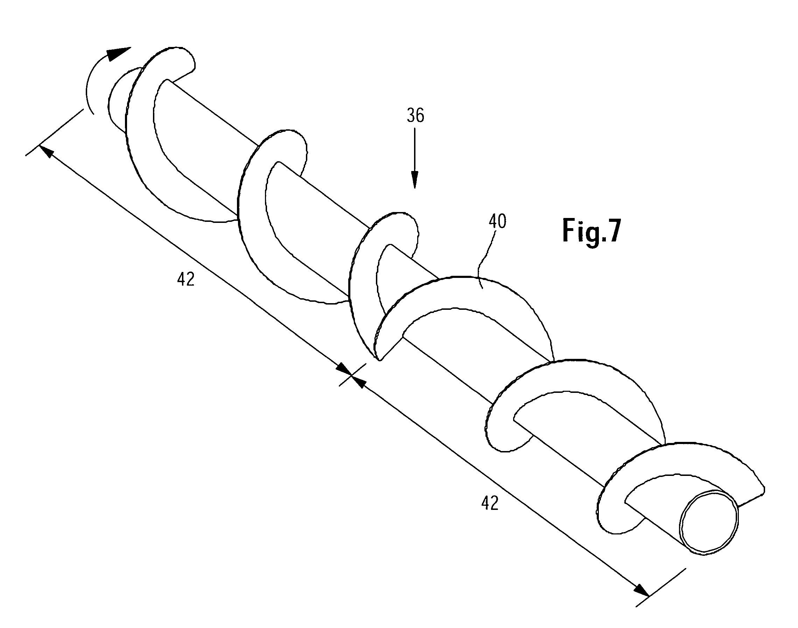

Weiterhin kann in einer alternativen Ausgestaltung des zweiten Rotors 36 der mittlere Abschnitt 44 übergangslos mit den Außenabschnitten 42 verbunden sein bzw. in diesem Fall entfallen (vgl. Figur 7). Die Schnecken 40 reichen hierbei von den äußeren Rändern der Außenabschnitte 42 bis zur Mitte des zweiten Rotors 36 und treffen sich dort. Eine solche Ausgestaltung kann für eine gleichmäßigere Verteilung des Erntegutes über die gesamte Arbeitsbreite des ersten Rotors 30 sorgen.

Der zweite Rotor 36 entsprechend den Figuren 5 bis 7 kann passiv oder aktiv in Rotation versetzt werden. Ein aktiver Antrieb kann gegebenenfalls eine variable Drehzahl vorsehen, die bspw. auf der Basis von Sensorgrößen, die ein Fördervolumen an aufgenommenem Erntegut repräsentieren, geregelt werden kann.

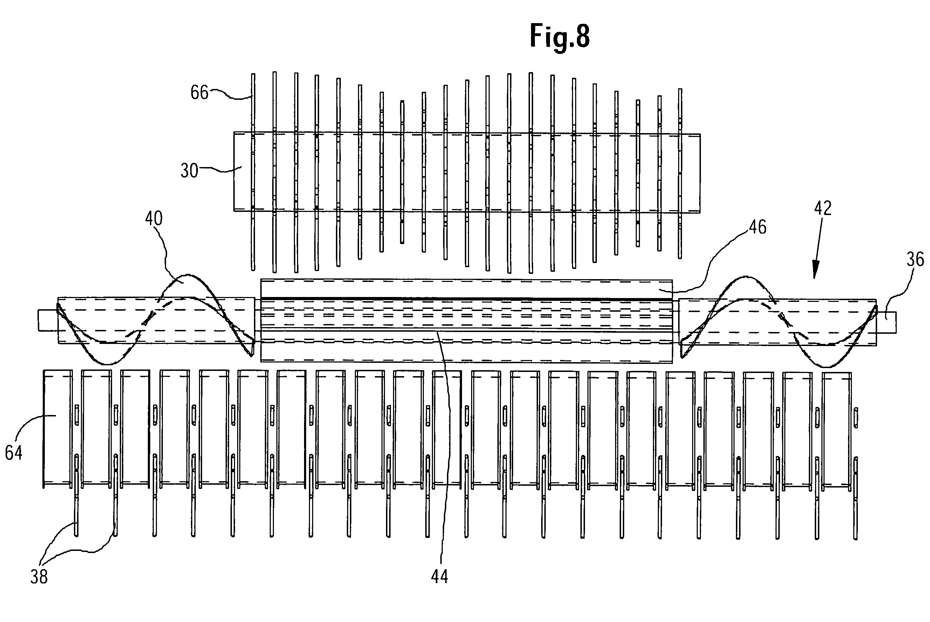

Figur 8 zeigt eine weitere alternative Ausgestaltung der erfindungsgemäßen Fördereinrichtung, bei welcher der zweite Rotor 36 aus zumindest zwei voneinander getrennten Teilen besteht. Im gezeigten Ausführungsbeispiel sind die beiden Außenabschnitte 42 mit den bereits zuvor erläuterten Querfördereinrichtungen in Gestalt der Schnecken 40 versehen und jeweils aktiv angetrieben. Der mittlere Abschnitt 44 ist mit den bereits beschriebenen Mitnehmerstegen 46 versehen und verfügt über keinen eigenen Antrieb, sondern wird vom Erntegut in Rotation versetzt. Die Drehachsen der Außenabschnitte 42 und des mittleren Abschnitts 44 fluchten vorzugsweise miteinander, wie dies in Figur 8 gezeigt ist. Insbesondere können die Außbenabschnitte 42 und der mittlere Abschnitt 44 auf einer gemeinsamen Welle bzw. Achse angeordnet sein.

Die Außenabschnitte 42 sorgen hierbei durch eine fest vorgegebene oder variable Umdrehungsgeschwindigkeit für einen definierten oder variablen Gutfluss in Querförderrichtung, so dass jederzeit eine zuverlässige Beschickung des ersten Rotors 30 mit Erntegut realisiert werden kann.

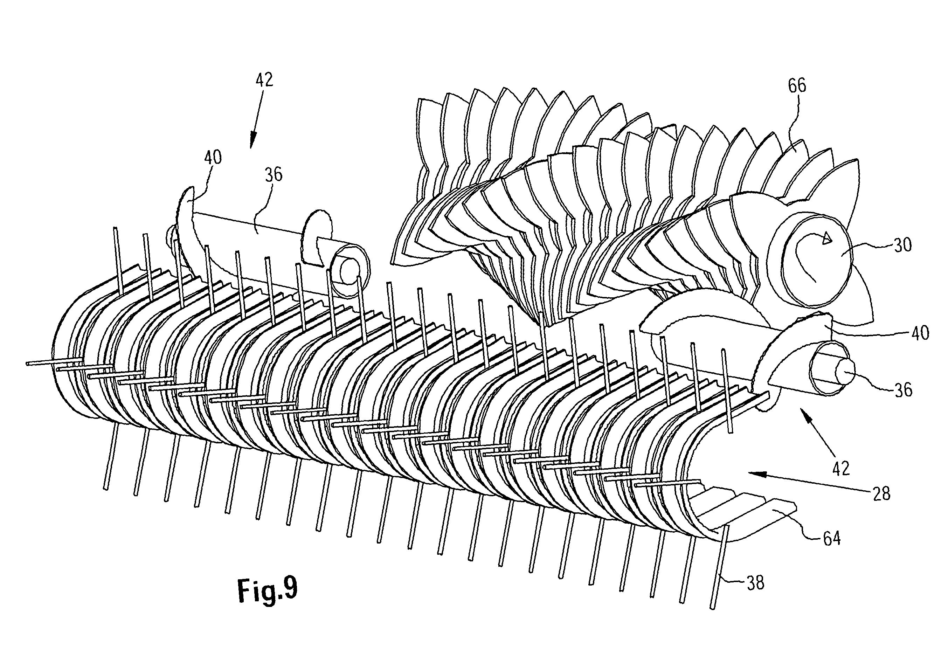

Figur 9 zeigt eine weitere Variante der Fördervorrichtung 8, bei der auf den mittleren Abschnitt 44 des zweiten Rotors gänzlich verzichtet ist. Ggf. können bei dieser Ausgestaltung die Mitnehmer 66 des ersten Rotors 30 im mittleren Abschnitt 44 des zweiten Rotors jeweils einen geringfügig größeren Außenumfang aufweisen, so dass jederzeit eine sichere Übernahme des Erntegutes zwischen Aufnehmerrotor 34 und erstem Rotor 30 gewährleistet ist.

Der Verzicht auf den mittleren Abschnitt des zweiten Rotors 36 wird durch dessen relativ kleinen Außendurchmesser begünstigt, da auf diese Weise der Aufnehmerrotor 34 relativ nah am ersten Rotor 30 angeordnet sein kann. Die Gefahr, dass Erntegut zwischen Aufnehmerrotor 34 und erstem Rotor 30 nach unten fällt und zu einer Verstopfung führt, ist dadurch relativ gering. Zudem drehen sich die Rotoren 30, 34, 36 mit relativ hoher Geschwindigkeit, so dass das Erntegut von den Aufnehmerzinken 38 in Richtung zum ersten Rotor 30 geworfen wird.

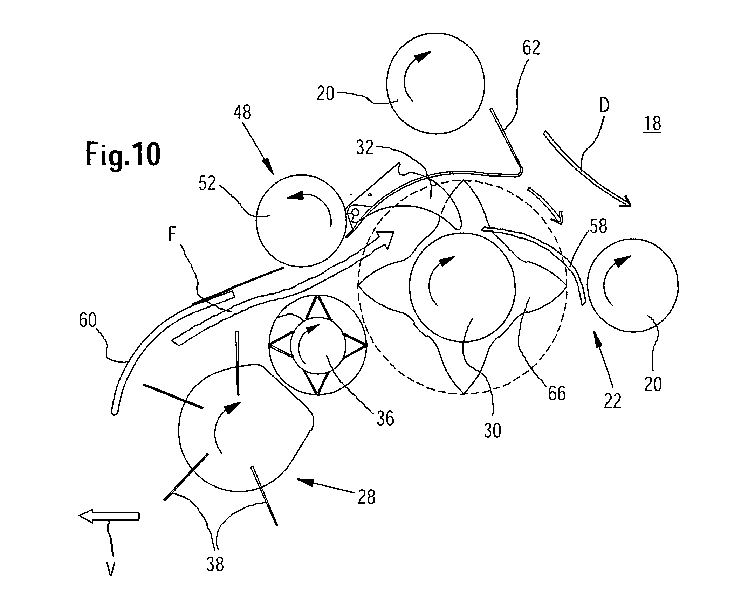

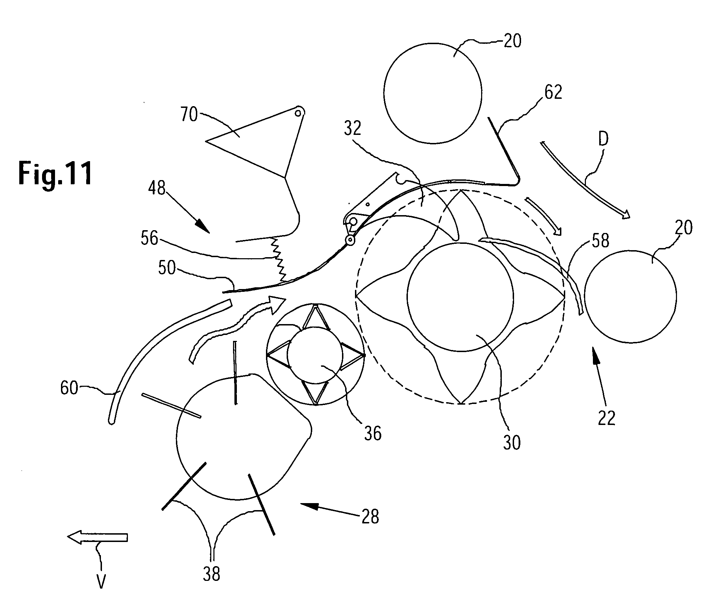

Figur 10 zeigt weiterhin eine Variante der Fördereinrichtung in einer schematischen Seitenansicht, bei der die Leitvorrichtung 48 oberhalb des zweiten Rotors 36 im Wesentlichen aus einer Walze 52 besteht. Die Walze 52 ist vorzugsweise drehbar angeordnet und rotiert bei einer Förderrichtung F des Erntegutes in entgegengesetzter Richtung zur Vorschubrichtung V der Erntebergungsmaschine 10 entgegen der Umdrehungsrichtung der Rotoren 30, 36, 34. Die Leitvorrichtung 48 kann alternativ auch aus einer federbelasteten Platte 50 gebildet sein, wie dies anhand der Figur 11 verdeutlicht ist. Die Platte 50 weist an ihrer Rückseite eine in diesem Fall als Andrückfeder ausgebildete Feder 56 auf, die gegebenenfalls von einer Stellvorrichtung 70 in ihrer Federspannung veränderlich ist. Die Feder 56 stützt sich vorzugsweise am Rahmen 12 der Erntebergungsmaschine 10 ab.

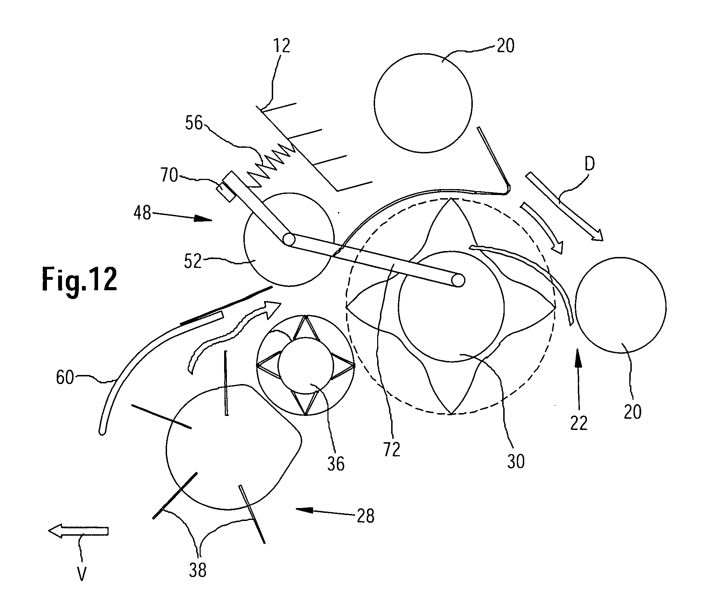

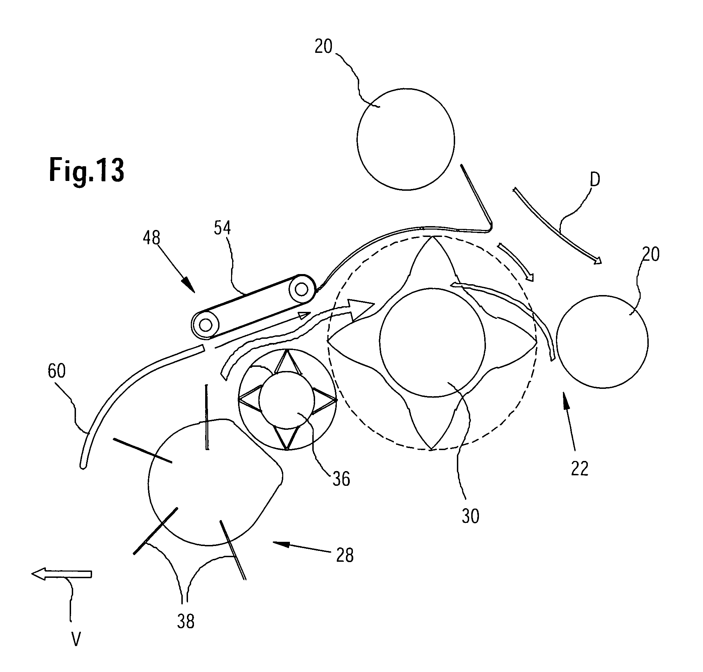

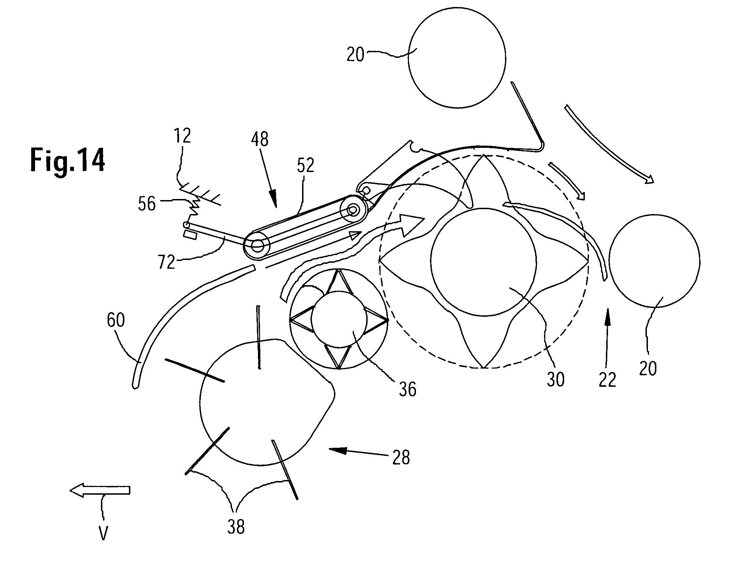

Eine Ausgestaltung mit einer federbelasteten Walze 52 ist in Figur 12 gezeigt. Eine weitere alternative Ausgestaltung mit einer Leitvorrichtung 48, die ein Förderband aufweist, ist an hand der Figur 13 verdeutlicht. In den Ausführungsbeispielen nach den Figuren 12 und 13 ist der Rotor 30 nicht Teil einer Schneidvorrichtung, sondern dient einzig der Förderung. Das Förderband 54 weist in einer der Fördervorrichtung zugewandten Seite die gleiche Förderrichtung F auf wie das Erntegut. Das Förderband 54 kann entweder aktiv angetrieben sein und damit den besseren Gutfluss fördern, oder vom Erntegut selbst angetrieben sein. Das Förderband 54 kann entweder starr angeordnet sein (vgl. Figur 13) oder über eine federbelastete Abstützung 72 verfügen und auf diese Weise eine variable Andrückkraft auf das Erntegut ausüben (vgl. Figur 14). Auch hierbei stützt sich die Feder 56 am Rahmen 12 ab.

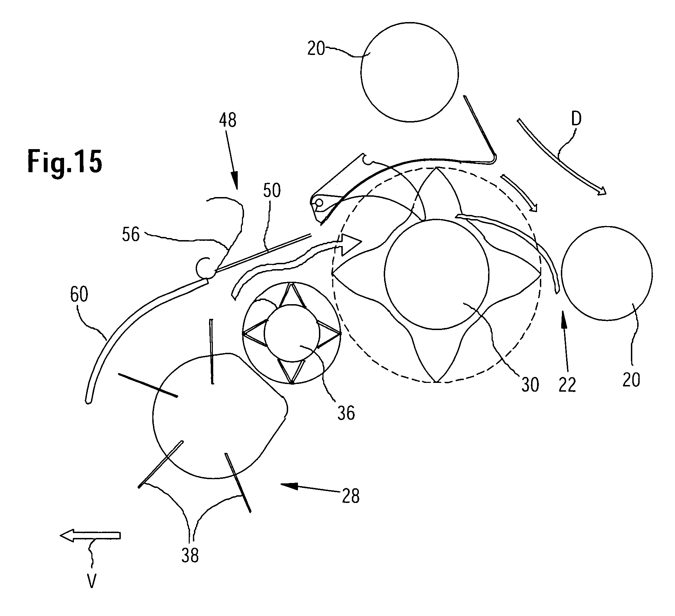

Figur 15 zeigt eine Variante bei der eine Platte 50 mit einer wiederum als Andrückfeder ausgebildeten Feder 56 in Richtung zum zweiten Rotor 36 gedrückt wird und auf diese Weise für eine variable Andrückkraft auf das geförderte Gut sorgen kann.

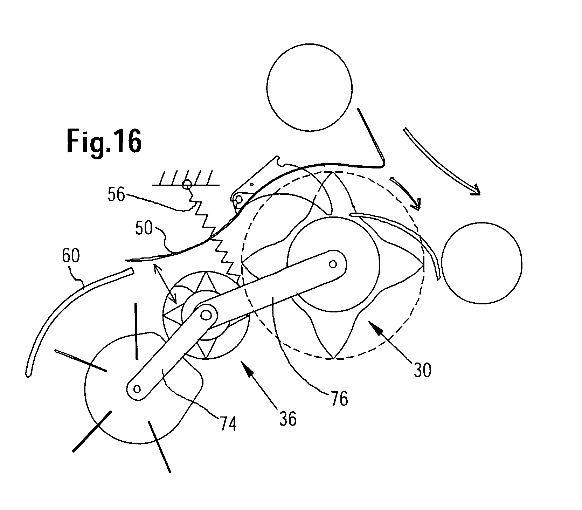

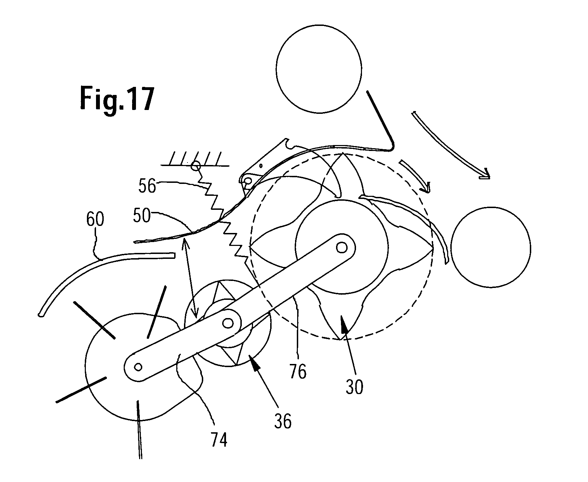

In den Figuren 16 und 17 wird der Gutstrom ebenfalls mittels einer Leitvorrichtung 48 zwischen beiden Rotoren 30 und 36 geführt; allerdings erfolgt eine Verdichtung bzw. Führung nicht infolge einer Verstellung der Leitvorrichtung 48, sondern dadurch, daß der zweite Rotor 36 quer zu dem Gutstrom und von einer Federkraft beaufschlagt beweglich ist.

Grundsätzlich könnte der zweite Rotor 36 - auf nicht gezeigte Weise - entweder auf Armen im Bereich des ersten Rotors 30, z. B. dessen Drehachse, oder auf Armen im Bereich des Gutaufnehmers 28 gegen bzw. aufgrund der Kraft einer als Zugfeder ausgebildeten Feder 56 vertikal geschwenkt werden und somit den Gutförderkanal verengen oder weiten. Daneben sind weitere Möglichkeiten, z. B. einer geradlinigen Führung denkbar.

In dem dargestellten Ausführungsbeispiel ist der Gutaufnehmer 28 mittels Armen 74 vertikal schwenkbar um die Drehachse des zweiten Rotors 36 und der zweite Rotor 36 mittels Armen 76 um die Drehachse des ersten Rotors 30 höhenbeweglich gelagert. Es ist offensichtlich, daß aufgrund der Schwenkbewegung der Arme 74, 76 der zweite Rotor 36 und der Gutaufnehmer 28 nicht nur eine quer zum Gutfluß gerichtete, sondern auch ein entlang des Gutflusses gerichtete Bewegung ausführen. Wenn es auch nicht gezeigt ist, so wird diese Längsbewegung dadurch ermöglicht, daß der Gutaufnehmer 28 schwimmend getragen ist und sich ebenfalls entlang der Gutflußrichtung bewegen kann. Der Arm 74 kann zudem starr mit dem Gutaufnehmer 28 verbunden sein, so daß dieser mit seinem Leitblech 60 bei seinem Schwenkvorgang um die Achse des zweiten Rotors 36 seine Neigung verändert. In diesem Fall ist in der Stellung nach Figur 16, in der der Gutfluß eingeengt ist, eine rückwärtige Kante des Leitblechs 60 folglich weiter von dem ersten Rotor 30 entfernt als in der Stellung nach Figur 17. Die Feder 56 ist so angeordnet und gespannt, daß sie den zweiten Rotor 36 stets in die den Gutstrom verengende Stellung bewegt.

## Patentansprüche

1. Erntebergungsmaschine (10), insbesondere Rundballenpresse, mit einer Presskammer (18), einem in diesen führenden Einlass (22) und einem dem Einlass (22) zugeordneten, überkopf fördernden ersten Rotor (30), **dadurch gekennzeichnet, dass** ein Umfangsbereich des ersten Rotors (30) zumindest bis an einen Umfangsbereich im unteren Bereich der Presskammer (18) reicht.

2. Erntebergungsmaschine nach Anspruch 1, **dadurch gekennzeichnet, dass** der erste Rotor (30) als Schneidrotor ausgebildet ist.

3. Erntebergungsmaschine nach Anspruch 2, **dadurch gekennzeichnet, dass** der erste Rotor (30) eine geringere Baubreite aufweist als ein stromaufwärts gelegener Gutaufnehmer (28).

4. Erntebergungsmaschine nach einem oder mehreren der vorherigen Ansprüche, **gekennzeichnet durch** einen zweiten Rotor (36), der dem ersten Rotor (30) vorgelagert und dem Gutaufnehmer (28) nachgelagert ist.

5. Erntebergungsmaschine nach einem oder mehreren der vorherigen Ansprüche, **dadurch gekennzeichnet, dass** der zweite Rotor (36) sich zumindest über eine seitliche Differenz zwischen der Außenkante des Gutaufnehmers (28) und dem ersten Rotor (30) erstreckt.

6. Erntebergungsmaschine nach einem oder mehreren der vorherigen Ansprüche, **dadurch gekennzeichnet, dass** der zweite Rotor (36) zumindest die gleiche Baubreite aufweist wie der Gutaufnehmer (28).

7. Erntebergungsmaschine nach einem oder mehreren der vorherigen Ansprüche, **dadurch gekennzeichnet, dass** der zweite Rotor (36) eine größere Baubreite aufweist als der erste Rotor (30).

8. Erntebergungsmaschine nach einem oder mehreren der vorherigen Ansprüche, **dadurch gekennzeichnet, dass** der zweite Rotor (36) überkopf fördert.

9. Erntebergungsmaschine nach einem oder mehreren der vorherigen Ansprüche, **dadurch gekennzeichnet, dass** Gutaufnehmer (28), erster Rotor (30) und zweiter Rotor (36) jeweils überkopf fördern.

10. Erntebergungsmaschine nach einem oder mehreren der vorherigen Ansprüche, **dadurch gekennzeichnet, dass** der zweite Rotor (36) zumindest in Außenabschnitten (42) jeweils eine Querfördereinrichtung mit einer nach innen gerichteten axialen Förderkomponente aufweist.

11. Erntebergungsmaschine nach einem oder mehreren der vorherigen Ansprüche, **dadurch gekennzeichnet, dass** der zweite Rotor (36) zumindest in den Außenabschnitten (42) als Schnecke (40) ausgebildet bzw. mit schneckenförmigen Stegen versehen ist.

12. Erntebergungsmaschine nach einem oder mehreren der vorherigen Ansprüche, **dadurch gekennzeichnet, dass** der zweite Rotor (36) einen mittleren Abschnitt (44) mit daran angeordneten Mitnehmern aufweist.

13. Erntebergungsmaschine nach einem oder mehreren der vorherigen Ansprüche, **dadurch gekennzeichnet, dass** die Mitnehmer als Finger, Mitnehmerzinken (68), Mitnehmerstege (46) und/oder als Paddel ausgebildet sind.

14. Erntebergungsmaschine nach einem oder mehreren der vorherigen Ansprüche, **dadurch gekennzeichnet, dass** die Mitnehmer als Schneckenwindungen ausgebildet sind.

15. Erntebergungsmaschine nach einem oder mehreren der vorherigen Ansprüche, **dadurch gekennzeichnet, dass** zumindest die Außenabschnitte (42) des zweiten Rotors (36) antreibbar sind und/oder ein Antrieb des mittleren Abschnitts (44) getrennt erfolgt.

16. Erntebergungsmaschine nach einem oder mehreren der vorherigen Ansprüche, **dadurch gekennzeichnet, dass** der zweite Rotor (36) nur aus den beiden angetriebenen Außenabschnitten (42) besteht und keinen mittleren Abschnitt (44) aufweist.

17. Erntebergungsmaschine nach einem oder mehreren der vorherigen Ansprüche, **dadurch gekennzeichnet, dass** zwischen zweitem Rotor (36) und erstem Rotor (30) eine Leitvorrichtung (48) angeordnet ist.

18. Erntebergungsmaschine nach einem oder mehreren der vorherigen Ansprüche, **dadurch gekennzeichnet, dass** die Leitvorrichtung (48) nachgiebig ist.

19. Erntebergungsmaschine nach einem oder mehreren der vorherigen Ansprüche, **dadurch gekennzeichnet, dass** die Leitvorrichtung (48) als Platte (50), Walze (52) und/oder als Förderband (54) ausgebildet ist.

20. Erntebergungsmaschine nach einem oder mehreren der vorherigen Ansprüche, **dadurch gekennzeichnet, dass** sie als Rundballenpresse (10) eine starre oder eine variable Presskammer (18) aufweist.

21. Erntebergungsmaschine nach einem oder mehreren der vorherigen Ansprüche, **dadurch gekennzeichnet, dass** die Presskammer (18) mit einem oder mehreren Riemen, mit Walzen bzw. Rollen (20) oder mit Stabketten versehen ist.

22. Erntebergungsmaschine nach einem oder mehreren der vorherigen Ansprüche, **dadurch gekennzeichnet, dass** der erste und/oder der zweite Rotor (30 und/oder 36) als ein um eine tatsächliche oder gedachte Achse umlaufender mit Gabeln, Zinken, Fingern oder dergleichen bestückter Drehkörper ausgebildet ist.

23. Erntebergungsmaschine nach einem oder mehreren der vorherigen Ansprüche, **dadurch gekennzeichnet, dass** der zweite Rotor (36) quer zu dem Gutfluß verstellbar ist.
